# EUROPEAN PATENT SPECIFICATION

(11) **EP 3 656 455 B1**
(45) Date of publication and mention of the grant of the patent: **09.10.2024**
(21) Application number: 17918554.1
(22) Date of filing: 21.11.2017
(51) Int. Cl.: B01D 53/04

(54) **SYSTEM FOR REMOVING VOCS USING GAS DISTRIBUTION PLATE**
SYSTEM ZUR ENTFERNUNG VON VOCS UNTER VERWENDUNG EINER GASVERTEILUNGSPLATTE
SYSTÈME D'ÉLIMINATION DE COV UTILISANT UNE PLAQUE DE DISTRIBUTION DE GAZ

(30) Priority: 21.07.2017 KR 20170092815; 18.08.2017 KR 20170105033
(43) Date of publication of application: 27.05.2020
(73) Proprietor: EcoProHN Co. Ltd., Cheongju-si, Chungcheongbuk-do 28116 (KR)
(72) Inventor: YOON, Seong Jin, Seoul 07434 (KR); MIN, Joon Seok, Cheongju-si Chungcheongbuk-do 28116 (KR); KIM, Jeong Yeon, Cheongju-si Chungcheongbuk-do 28116 (KR); PARK, Sang Jun, Cheongju-si Chungcheongbuk-do 28123 (KR); HAN, Young Kyu, Cheongju-si Chungcheongbuk-do 28392 (KR); CHOI, Jae Young, Cheongju-si Chungcheongbuk-do 28116 (KR); CHO, Nam Ung, Cheongju-si Chungcheongbuk-do 28115 (KR); MOON, Sang Gil, Cheongju-si Chungcheongbuk-do 28116 (KR)
(74) Representative: Schön, Christoph
(86) International application number: PCT/KR2017/013281
(87) International publication number: WO 2019/017533

(56) References cited:
- JP-A- 2011 253 653
- JP-A- 2013 123 669
- KR-A- 20160 136 988
- KR-A- 20160 137 699
- KR-B1- 101 132 597
- US-A1- 2010 175 557
- US-B2- 8 187 368

## Description

### [Technical Field]

The present invention relates to a system for removing VOCs using gas distribution plates, and more specifically, to a system for removing VOCs using gas distribution plates according to the claims, which simultaneously uses rotary gas distribution plates and microwave modules when desorbing VOCs adsorbed in a regeneration zone, thereby maximizing an efficiency of microwaves and effectively processing a large amount of VOCs gas.

### [Background Art]

Volatile organic compounds (VOCs) are easily evaporated in the atmosphere due to a very high vapor pressure, and is a representative substance that causes a photochemical reaction by receiving sunlight when coexisting with nitrogen oxides, and produces ozone and photochemical oxidizing substances to cause photochemical smog. Due to these problems, strict regulations relating thereto are being implemented both at home and abroad, and treatment thereof remains a national top priority to be addressed urgently.

Meanwhile, since painting plants of a shipyard have been excluded from being subject to emission regulations of volatile organic compounds (VOCs), legal regulations on VOCs removal facilities have been satisfied by a method of enlarging a scale of the plant. However, as environmental regulations are reinforced, there is a need for installation of effective VOCs removal facilities. In a case of a regenerative thermal oxidizer (RTO), which is an existing regenerative combustion facility, operation costs are increased by burning air which is not highly concentrated, and an installation space thereof is insufficient due to equipment requiring an enlarged size.

In view of these problems, a technique using microwaves has also been developed to reduce the operation costs and installation space in removing the VOCs.

Patent Document 1 (Korean Patent Registration No. 10-1323108), which relates to a VOCs removal system, discloses a method for recycling a honeycomb type VOCs adsorption rotor by directly irradiating the adsorption rotor with horizontally polarized microwaves. In this case, due to a difficulty in blocking the leaked microwaves, an efficiency of the microwaves may be reduced and the work stability may be decreased. In addition, since there is a limit to a capacity that can be processed in one adsorption rotor, it is difficult to utilize the above system in a large-scale workplace such as a painting plant of the shipyard. Further, the operation costs are increased due to a continuous operation of the adsorption rotor, and a recycled air is partially dispersed before reaching a regeneration zone.

Therefore, in view of these problems, it is necessary to develop a VOCs removal system capable of maximizing energy efficiency while reducing a burden on a separate microwave blocking facility.
US 2010/175557 A1 and JP 2013-123669 A relate to a system for removing VOCs including gas distribution plates and disclose a desorption apparatus.

### [Summary of Invention]

### [Problems to be Solved by Invention]

Accordingly, it is an object of the present invention to provide a VOCs removal system as defined in the claims, which may maximize an efficiency of microwaves, simplify a facility and reduce operation costs thereof, as well as effectively process a large volume of VOCs gas.

However, the problem to be solved by the present invention is not limited to the above-mentioned problems, and those skilled in the art will clearly understand other problems which are not mentioned above from the following description.

### [Means for Solving Problems]

In order to achieve the above-described object, according to an aspect of the present invention, there is provided a system for removing VOCs using gas distribution plates as defined in claim 1.

### [Advantageous Effects]

According to the VOCs removal system of the present invention, it is possible to simplify a facility and reduce the operation costs by including the rotary type gas distribution plates, which are relatively lighter than the adsorption reactor and the microwave modules. In addition, the adsorption and desorption time may be easily controlled, and the adsorption and desorption processes may be performed simultaneously in various zone, thereby saving energy and reducing an installation space of the facility. Further, since the microwave efficiency can be maximized and the recycling efficiency can be increased, a large volume of VOCs gas may be effectively processed.

### [Brief Description of Drawings]

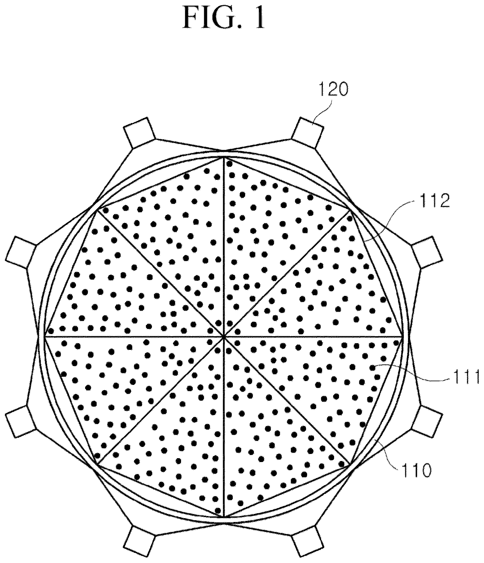

FIG. 1 is a cross-sectional view illustrating some components of a VOCs removal system (also referred to as a "VOCs removal system") according to an embodiment of the present invention, with a configuration in which microwave modules are disposed so as to surround an outer periphery of a cylindrical adsorption reactor.
FIG. 2 is a view illustrating a concept of upper and lower gas distribution plates which are installed when the VOCs removal system according to the embodiment of the present invention has one regeneration zone.
FIG. 3 is a view illustrating a concept of upper and lower gas distribution plates which are installed when the VOCs removal system according to the embodiment of the present invention has two regeneration zone.
FIG. 4 is a view illustrating a configuration in which the upper and lower gas distribution plates are provided in the cylindrical adsorption reactor when the VOCs removal system according to the embodiment of the present invention has one regeneration zone.
FIG. 5 is a view illustrating a configuration in which the upper and lower gas distribution plates are provided in the cylindrical adsorption reactor when the VOCs removal system according to the embodiment of the present invention has two regeneration zone.
FIG. 6 is a cross-sectional view of the VOCs removal system according to the embodiment of the present invention.
FIG. 7 is a view illustrating a configuration in which the VOCs removal system according to the embodiment of the present invention and peripheral facilities are integrated.
FIG. 8 is a perspective view illustrating a configuration of the microwave module having slotted waveguides installed in one divided zone of the cylindrical reactor according to the embodiment of the present invention.

### [Mode for Carrying out Invention]

Hereinafter, a system for removing VOCs using gas distribution plates of the present invention will be described in detail with reference to the accompanying drawings.

The present invention discloses a system for removing VOCs using gas distribution plates as defined in the claims.

The present invention is intended to simplify a facility and reduce operation costs by including the rotary type gas distribution plates, which are relatively lighter than the adsorption reactor and the microwave modules.

The cylindrical adsorption reactor 110 is filled with an adsorbent 111 including activated carbon, zeolite, and the like so as to adsorb VOCs components in a VOCs-containing gas. In addition, an inside of the cylindrical adsorption reactor 110, which is filled with the adsorbent 111, is radially divided into a plurality of zone based on a central axis. The adsorption reactor having the divided zone therein includes adsorption zone configured to adsorb VOCs in the VOCs-containing gas supplied from an outside, and at least one regeneration zone configured to desorb the VOCs adsorbed in the adsorption zone through a recycled air with a high temperature. In addition, the adsorption reactor may further include a cooling zone in which cooling is performed after the VOCs are desorbed.

The plurality of microwave modules 120 are disposed at a predetermined interval along the outer periphery of the cylindrical adsorption reactor 110. Preferably, the microwave module 120 may be disposed on each side, that is, each peripheral surface of the radially divided zone of the cylindrical adsorption reactor 110.

The plurality of microwave modules 120 are manufactured to be included as a portion of a case 140 which surrounds the peripheral surface of the cylindrical adsorption reactor 110. Thereby, the case 140 including the microwave modules 120 may prevent the microwave from being leaked to the outside from the peripheral surface of the cylindrical adsorption reactor 110. When recycling the zone in which the microwave module 120 is disposed, the microwave module is turned on to irradiate the regeneration zone with microwaves, thus to heat the VOCs-containing gas therein. When the recycling is completed, the microwave module is turned off and an operation of the system is stopped. The peripheral surface of the cylindrical adsorption reactor 110 may be made of a mica plate 112 to allow the microwaves to pass through.

The microwave module may employ a method of irradiating the regeneration zone with microwaves through a waveguide. In this case, the waveguide may be formed in an undivided state, that is, may have one passage through which the microwave passes.

Alternatively, the microwave module 120' may include a waveguide 170 having a plurality of slots to uniformly divide the passage through which the microwave passes so as to relatively uniformly irradiate the regeneration zone with the microwaves. That is, it may be configured in such a way that, each of the plurality of microwave modules is disposed along the lateral periphery of the radially divided zone 110 of the cylindrical adsorption reactor, and has the waveguide 170 including the plurality of slots, so as to uniformly emit the microwaves through the plurality of slots.

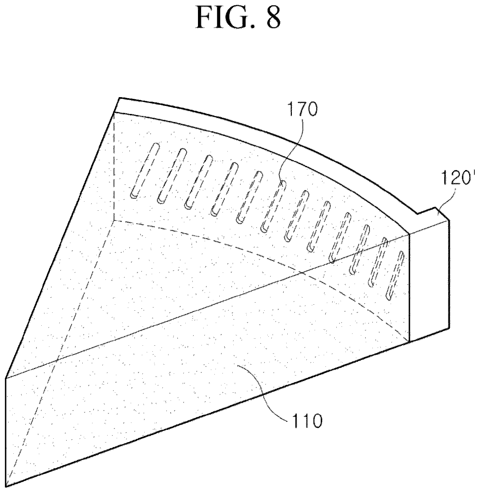

FIG. 8 is a perspective view illustrating the microwave module 120' with the slotted waveguide 170 installed in the lateral periphery of one divided zone of the cylindrical reactor 110. As shown in FIG. 8, the waveguide may be configured to emit the microwaves from one lateral portion thereof, or emit the microwaves from a central portion thereof.

The rotary gas distribution plate is configured to be disposed on the upper and lower portions of the cylindrical adsorption reactor 110, respectively. The upper gas distribution plates 130a and 130a' disposed on the upper portion of the cylindrical adsorption reactor 110 include supply pipes 133a and 133a' for supplying the recycled air to the regeneration zone of the cylindrical adsorption reactor 110. The recycled air is supplied to the supply pipes 133a and 133a' through recycled air inlets 132a and 132a' connected thereto. Meanwhile, the lower gas distribution plates 130b and 130b' disposed on the lower portion of the cylindrical adsorption reactor 110 include discharge pipes 133b and 133b' for discharging the recycled air containing VOCs desorbed from the regeneration zone of the cylindrical adsorption reactor 110. The discharge pipes 133b and 133b' may be connected with recycled air outlets 132b and 132b' . The supply pipes 133a and 133a' of the upper gas distribution plates 130a and 130a' and the discharge pipes 133b and 133b' of the lower gas distribution plates 130b and 130b' are located at a portion in which the regeneration zone of the cylindrical adsorption reactor 110 is projected directly above or below the regeneration zone of the cylindrical adsorption reactor 110, respectively. For the convenience of explanation, zone in which the regeneration zone of the cylindrical adsorption reactor 110 are projected on the upper gas distribution plates 130a and 130a' will be referred to as upper regeneration zone 131a and 131a' , and zone in which the regeneration zone are projected on the lower gas distribution plates 130b and 130b' will be referred to as lower zone 131b and 131b'.

The upper gas distribution plates 130a and 130a' and the lower gas distribution plates 130b and 130b' are configured to rotate periodically in the same direction, with the same rotation period as each other on the upper and lower portions of the cylindrical adsorption reactor 110.

When the upper gas distribution plates 130a and 130a' and the lower gas distribution plates 130b and 130b' rotate, and then the upper regeneration zone 131a and 131a' and the lower regeneration zone 131b and 131b' are located on the same vertical line as the regeneration zone of the cylindrical adsorption reactor 110, that is, during the supply pipes 133a and 133a' and the discharge pipes 133b and 133b' being located at upper and lower sections of the regeneration zone, the recycled air is supplied to the upper section of the regeneration zone of the cylindrical adsorption reactor 110 through the supply pipes 133a and 133a'. At the same time, the microwave module 120 disposed on the sides of the regeneration zone is switched from an operation stop state to an operation state, thereby heating the regeneration zone. As a result, the adsorbed VOCs components are desorbed. The recycled air containing the desorbed VOCs is discharged through discharge pipes 133b and 133b' disposed on the lower section of the regeneration zone.

The rotation period and recycling time may be adjusted by pre-setting them through a timer or program. That is, the rotation period of the upper and lower gas distribution plates 130a, 130a', 130b, and 130b', a rotation stop time during recycling, and an operation time of the microwave module 120 may be preset through the timer or program. Therefore, it is possible to easily control the adsorption and desorption time of VOCs.

Alternatively, it may be configured in such a way that, by including sensors, positions of the upper regeneration zone 131a and 131a' and the lower regeneration zone 131b and 131b' located on the same vertical line as the regeneration zone of the cylindrical adsorption reactor 110 are detected, so as to stop the rotation of the upper and lower gas distribution plates 130a, 130a', 130b and 130b', and perform an injection of the recycled air and an operation of the microwave module 120 based on the detected positions.

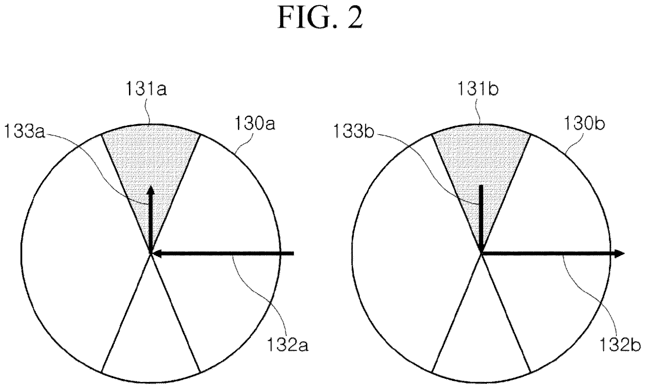

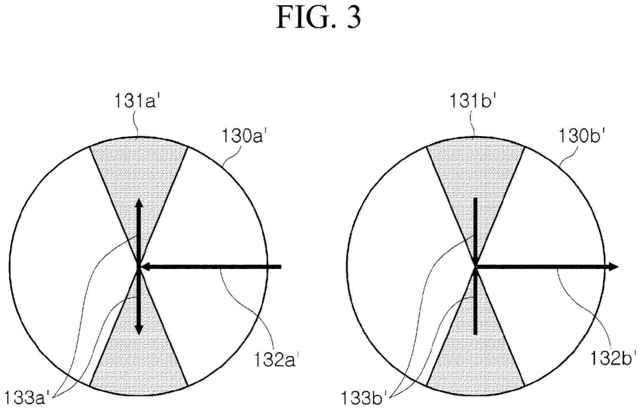

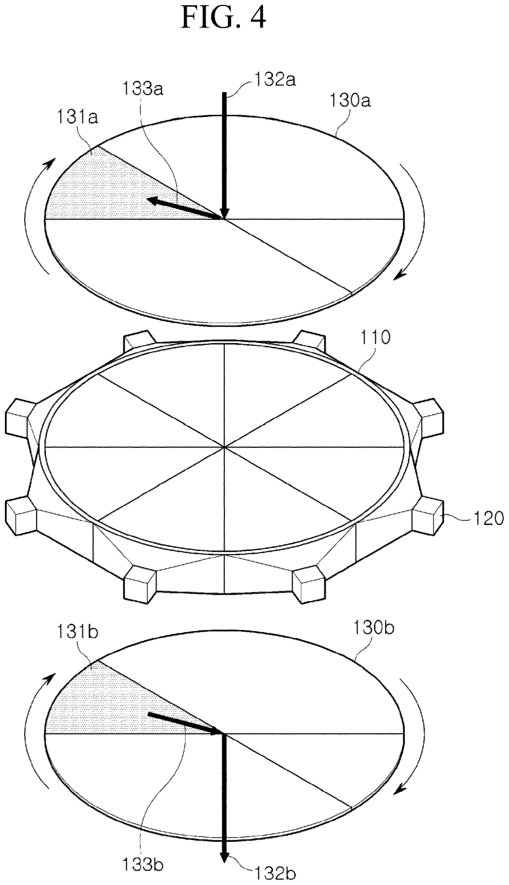

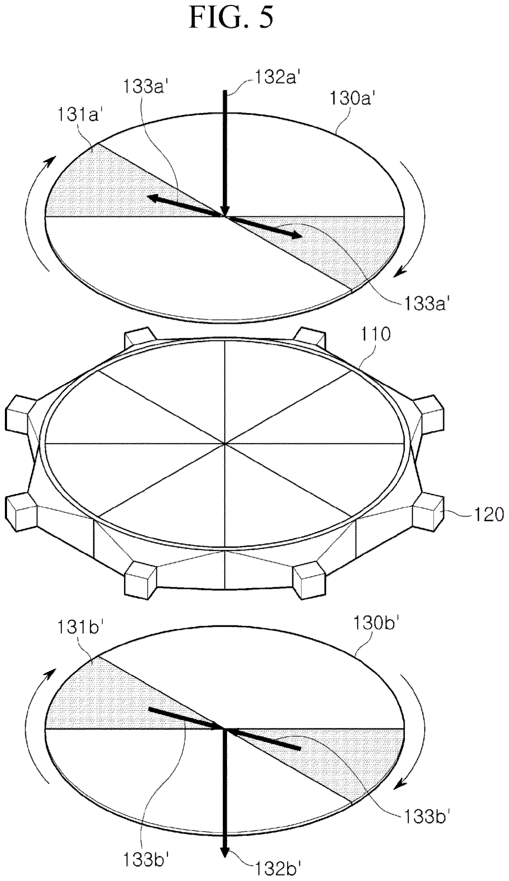

The region to be recycled at the same time may be one divided regeneration zone or a plurality of regeneration zone radially arranged at a predetermined interval. FIGS. 2 and 4, and FIGS. 3 and 5 are views illustrating a concept in which the upper and lower gas distribution plates are coupled with the cylindrical adsorption reactor in cases of having one regeneration zone and two regeneration zone, respectively.

As such, in order to achieve a single or a plurality of regeneration zone in the cylindrical adsorption reactor 110, the numbers of the supply pipes 133a and 133a' of the upper gas distribution plates 130a and the discharge pipes 133b and 133b' of the lower gas distribution plates 130b and 130b' are set so that one or a plurality of pipes are radially disposed at a predetermined interval. In this case, the plurality of supply pipes 133a and 133a' and the discharge pipes 133b and 133b' are disposed radially at a predetermined interval about rotation axes of the upper and lower gas distribution plates 130a, 130a', 130b and 130b'.

Similar to the regeneration zone, the adsorption zone may be formed in several zone at the same time. As such, the adsorption and desorption processes may be performed in the several zone at the same time, thereby saving energy and installation space of the facility.

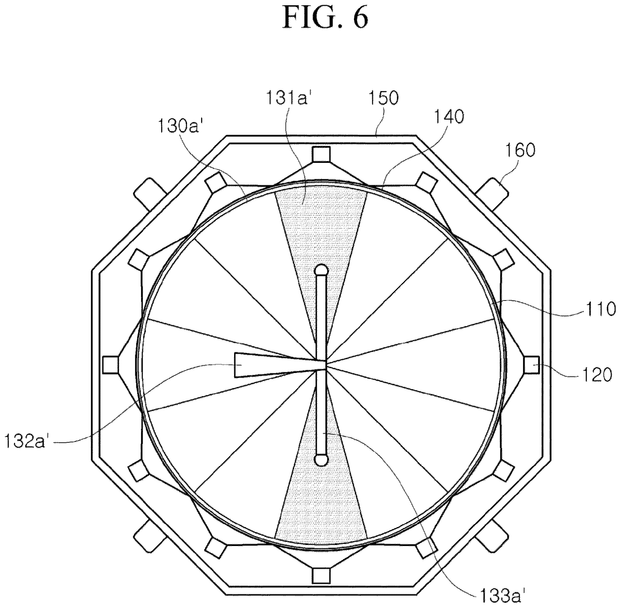

As shown in FIG. 6, the VOCs removal system of the present invention further includes an additional case 150 which surrounds the upper gas distribution plates 130a and 130a' and the lower gas distribution plates 130b and 130b', and the microwave modules 120, and compressed air inlets 160 formed in the additional case 150. Herein, a degree of adhesion between the upper and lower gas distribution plates 130a, 130a', 130b and 130b' and the cylindrical adsorption reactor 110 is adjusted by injecting or discharging a compressed air through the compressed air inlets 160.

That is, it is configured in such a way that: the upper gas distribution plates 130a and 130a' and the lower gas distribution plates 130b and 130b' are in close contact with the cylindrical adsorption reactor 110 during supplying the recycled air to the regeneration zone and maintaining the operation state of the microwave module 120; and the upper gas distribution plates 130a and 130a' and the lower gas distribution plates 130b and 130b' are spaced apart from the cylindrical adsorption reactor 110 when stopping a supply of the recycled air to the regeneration zone and switching the microwave module 120 to the operation stop state. By injecting and discharging the compressed air into and from the regeneration zone as described above, the degree of adhesion between the upper and lower gas distribution plates 130a, 130a', 130b and 130b' and the cylindrical adsorption reactor 110 can be adjusted. Through such a configuration, the supplied recycled air is prevented from being distributed to the adsorption zone or the cooling zone adjacent to the regeneration zone so as to allow the supplied recycled air to be fully used for a recycling operation.

In order to further enhance the effect of recycling, the cross-sectional areas of the upper gas distribution plates 130a and 130a' and the lower gas distribution plates 130b and 130b' are preferably configured to coincide with the cross-sectional area of the cylindrical adsorption reactor 110.

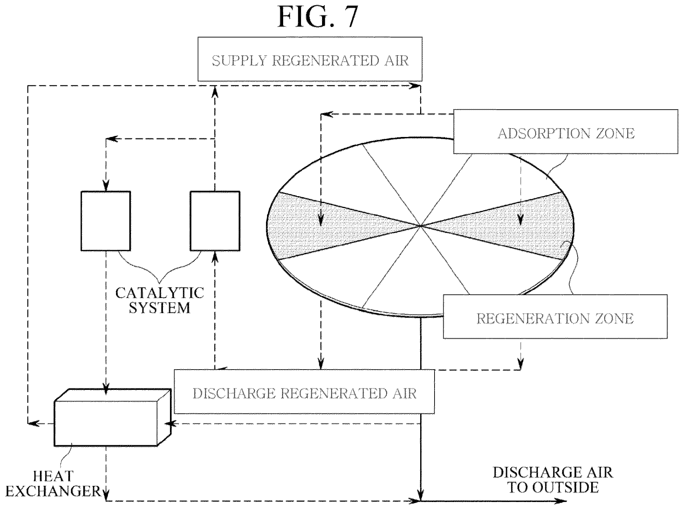

FIG. 7 is a view illustrating a configuration in which the cylindrical adsorption reactor 110 of the present invention, a catalyst system, and a heat exchanger are integrated.

The VOCs-containing gas is supplied to the adsorption zone from the outside, and VOCs of the VOCs-containing gas are adsorbed thereto. In this case, a fresh air from which the VOCs are removed by adsorption is discharged to the outside.

As the VOCs-containing recycled air discharged from the regeneration zone passes through a catalytic reactor, the VOCs are desorbed from the regeneration zone and oxidatively decomposed into carbon dioxide and water. That is, in the catalytic reactor, the VOCs are oxidized into carbon dioxide (CO₂) and water (H₂O) under a heating condition at about 200 to 350°C, in this case, a Pd catalyst, Pt catalyst, Ru catalyst or Rh catalyst may be used as an oxidation catalyst.

The catalytic reactor of the present invention may be further provided with a separate microwave module to be utilized as a heat source. The desorbed VOCs-containing hot gas is introduced into a body of the catalytic reactor, and absorbs microwaves to be used as a heat source, thereby the VOCs are removed and treated by facilitating the decomposition thereof.

The hot air containing CO₂/H₂O passing through the catalytic reactor is subjected to heat exchange in a heat exchanger, a waste heat generated from the catalytic reactor is supplied to the recycled air, which may be recycled as energy for a desorption reaction in the regeneration zone.

When the adsorption reactor of the present invention includes the cooling zone, after the VOCs are desorbed in the cooling zone, cooling of the adsorption reactor in which the surface temperature is increased by microwaves is performed. At this time, by supplying a cooling air to the cooling zone, the adsorption reactor may be cooled to room temperature. The injected cooling air is converted into a hot air having a temperature of about 50 to 100°C, and similar to the hot air containing CO₂/H₂O passing through the catalytic reactor, the hot air passing through the cooling zone is also subjected to heat exchange in the heat exchanger, and the waste heat is supplied to the recycled air, which may be recycled as energy for the desorption reaction in the regeneration zone.

On the other hand, the air cooled while passing through the heat exchanger and CO₂/H₂O are discharged to the outside.

As described above, according to the present invention, by fixing the adsorption reactor and the microwave module, which occupy a large part in terms of volume and weight in the VOCs removal system, and by including the gas distribution plates having a relatively lightweight in a rotary type structure, it is possible to simplify a facility and reduce the operation costs. In addition, since the adsorption and desorption time can be easily controlled and the adsorption and desorption processes can be carried out simultaneously in several zone, a single adsorption reactor may achieve effects similar to the effects obtained by several adsorption reactors. Further, since the microwave modules are fixed to the adsorption reactor in terms of the structure thereof, it is possible to prevent the microwave from being leaked to the outside from the peripheral surface of the adsorption reactor. Furthermore, the upper and lower gas distribution plates 130a, 130a', 130b and 130b' are configured to be in close contact with the adsorption reactor while irradiating with the microwaves, such that it is possible to maximize the efficiency of the microwaves by blocking the microwave leakage in the upper and lower zone of the adsorption reactor. In addition, it is possible to increase the recycling efficiency, by preventing the recycling gas from being dispersed in the adsorption zone or the cooling zone adjacent to the regeneration zone.

## Claims

1. A system for removing VOCs using gas distribution plates, comprising:
a fixed cylindrical adsorption reactor (110) including an adsorption zone configured to adsorb VOCs and a regeneration zone configured to desorb the VOCs adsorbed in the adsorption zone;
a plurality of microwave modules (120) disposed at a predetermined interval along an outer periphery of the cylindrical adsorption reactor (110), the plurality of microwave modules (120) being included as a part of a case (140) which surrounds a peripheral surface of the cylindrical adsorption reactor (110);
a rotary upper gas distribution plate (130a) having a supply pipe (133a) configured to supply a recycled air to the regeneration zone and disposed on an upper portion of the cylindrical adsorption reactor (110); and
a rotary lower gas distribution plate (130b) having a discharge pipe (133b) configured to discharge the recycled air containing VOCs desorbed from the regeneration zone and disposed on a lower portion of the cylindrical adsorption reactor (110),
wherein, when the upper gas distribution plate (130a) and the lower gas distribution plate (130b) rotate, and then the supply pipe and the discharge pipe are located in an upper section and a lower section of the regeneration zone, the recycled air is supplied to the regeneration zone, and at the same time, a microwave module (120) disposed on a peripheral surface of the regeneration zone is switched to an operation state to heat the regeneration zone;
an additional case (150) which surrounds the upper gas distribution plate (130a) and the lower gas distribution plate (130b), and the microwave module; and
compressed air inlets (160) formed in the additional case (150),
wherein a degree of adhesion between the upper and lower gas distribution plates and the cylindrical adsorption reactor (110) is adjusted by injecting or discharging a compressed air through the compressed air inlets (160), and
wherein the upper gas distribution plate (130a) and the lower gas distribution plate (130b) are in close contact with the cylindrical adsorption reactor (110) during supplying the recycled air to the regeneration zone and maintaining the operation state of the microwave module (120); and
the upper gas distribution plate (130a) and the lower gas distribution plate (130b) are spaced from the cylindrical adsorption reactor (110) when stopping a supply of the recycled air to the regeneration zone and switching the microwave module (120) to an operation stop state.

2. The system for removing VOCs using gas distribution plates according to claim 1, wherein the cylindrical adsorption reactor (110) has a cross-sectional area coinciding with cross-sectional areas of the upper gas distribution plate (130a) and the lower gas distribution plate (130b).

3. The system for removing VOCs using gas distribution plates according to claim 1, wherein the upper gas distribution plate (130a) and the lower gas distribution plate (130b) periodically rotate in the same direction and have the same rotation period as each other.

4. The system for removing VOCs using gas distribution plates according to claim 1, wherein a plurality of supply pipes (133a) and discharge pipes (133b) are radially disposed at a predetermined interval about rotation axes of the upper and lower gas distribution plates, thus to achieve a plurality of regeneration zone in the cylindrical adsorption reactor (110).

5. The system for removing VOCs using gas distribution plates according to claim 1, further comprising a catalytic reactor configured to oxidize the VOCs desorbed in the regeneration zone.

6. The system for removing VOCs using gas distribution plates according to claim 5, further comprising a heat exchanger configured to perform heat exchange on a hot air passing through the catalytic reactor, such that a waste heat generated from the catalytic reactor is supplied to the recycled air.

7. The system for removing VOCs using gas distribution plates according to claim 1, wherein each of the plurality of microwave modules (120) has waveguides which are disposed along the outer periphery of the cylindrical adsorption reactor (110), and have a plurality of slots, such that the regeneration zone is uniformly irradiated with microwaves through the plurality of slots.

## Patentansprüche

1. System zum Entfernen flüchtiger organischer Verbindungen (VOCs) unter Verwendung von Gasverteilerplatten, umfassend:
einen festen zylindrischen Adsorptionsreaktor (110), der einen Adsorptionsbereich mit Konfiguration zum Adsorbieren von VOCs und einen Regenerationsbereich mit Konfiguration zum Desorbieren der in dem Adsorptionsbereich adsorbierten VOCs umfasst;
eine Vielzahl von Mikrowellenmodulen (120), die in einem vorgegebenen Abstand entlang eines Außenumfangs des zylindrischen Adsorptionsreaktors (110) angeordnet sind, wobei die Vielzahl von Mikrowellenmodulen (120) als Teil eines Gehäuses (140) eingefügt ist, das eine Umfangsfläche des zylindrischen Adsorptionsreaktors (110) umgibt;
eine drehbare obere Gasverteilerplatte (130a) mit einem Zufuhrrohr (133a), die konfiguriert ist, dem Regenerationsbereich recycelte Luft zuzuführen, und die in einem oberen Abschnitt des zylindrischen Adsorptionsreaktors (110) angeordnet ist; und
eine drehbare untere Gasverteilerplatte (130b) mit einem Ablassrohr (133b), die konfiguriert ist, die recycelte Luft, die die aus dem Regenerationsbereich desorbierten VOCs enthält, abzuführen, und die in einem unteren Abschnitt des zylindrischen Adsorptionsreaktors (110) angeordnet ist,
wobei, wenn sich die obere Gasverteilerplatte (130a) und die untere Gasverteilerplatte (130b) drehen und sich dann das Zufuhrrohr und das Abfuhrrohr in einem oberen Abschnitt und einem unteren Abschnitt des Regenerationsbereichs befinden, die recycelte Luft dem Regenerationsbereich zugeführt wird und gleichzeitig ein an einer Umfangsfläche des Regenerationsbereichs angeordnetes Mikrowellenmodul (120) in einen Betriebszustand geschaltet wird, um den Regenerationsbereich zu erwärmen,
ein Zusatzgehäuse (150), das die obere Gasverteilerplatte (130a) und die untere Gasverteilerplatte (130b) sowie das Mikrowellenmodul umgibt; und
in dem Zusatzgehäuse (150) ausgebildete Drucklufteinlässe (160),
wobei ein Grad der Haftung zwischen den oberen und unteren Gasverteilerplatten und dem zylindrischen Adsorptionsreaktor (110) durch Einblasen oder Ablassen von Druckluft durch die Drucklufteinlässe (160) eingestellt wird, und
wobei die obere Gasverteilerplatte (130a) und die untere Gasverteilerplatte (130b) während der Zufuhr von recycelter Luft in den Regenerationsbereich und der Aufrechterhaltung des Betriebszustands des Mikrowellenmoduls (120) in engem Kontakt mit dem zylindrischen Adsorptionsreaktor (110) stehen; und
die obere Gasverteilerplatte (130a) und die untere Gasverteilerplatte (130b) von dem zylindrischen Adsorptionsreaktor (110) beabstandet sind, wenn eine Zufuhr von recycelter Luft in den Regenerationsbereich gestoppt und das Mikrowellenmodul (120) in einen Betriebsstoppzustand geschaltet wird.

2. System zum Entfernen von VOCs unter Verwendung von Gasverteilerplatten nach Anspruch 1,
wobei der zylindrische Adsorptionsreaktor (110) eine Querschnittsfläche aufweist, die mit den Querschnittsflächen der oberen Gasverteilerplatte (130a) und der unteren Gasverteilerplatte (130b) übereinstimmt.

3. System zum Entfernen von VOCs unter Verwendung von Gasverteilerplatten nach Anspruch 1, wobei sich die obere Gasverteilerplatte (130a) und die untere Gasverteilerplatte (130b) periodisch in die gleiche Richtung drehen und die gleiche Rotationsperiode miteinander aufweisen.

4. System zum Entfernen von VOCs unter Verwendung von Gasverteilerplatten nach Anspruch 1,
wobei eine Vielzahl von Zufuhrrohren (133a) und Ablassrohren (133b) radial in einem vorgegebenen Abstand um die Rotationsachsen der oberen und unteren Gasverteilerplatten angeordnet sind, um so eine Vielzahl von Regenerationsbereichen in dem zylindrischen Adsorptionsreaktor (110) bereitzustellen.

5. System zum Entfernen von VOCs unter Verwendung von Gasverteilerplatten nach Anspruch 1,
das ferner einen katalytischen Reaktor umfasst, der zur Oxidation der in dem Regenerationsbereich desorbierten VOCs konfiguriert ist.

6. System zum Entfernen von VOCs unter Verwendung von Gasverteilerplatten nach Anspruch 5,
das ferner einen Wärmetauscher umfasst, der konfiguriert ist, einen Wärmeaustausch von heißer Luft durchzuführen, die durch den katalytischen Reaktor strömt, so dass die von dem katalytischen Reaktor erzeugte Abwärme der recycelten Luft zugeführt wird.

7. System zum Entfernen von VOCs unter Verwendung von Gasverteilerplatten nach Anspruch 1,
wobei jedes der Vielzahl von Mikrowellenmodulen (120) Wellenführungen aufweist, die entlang des Außenumfangs des zylindrischen Adsorptionsreaktors (110) angeordnet sind, und eine Vielzahl von Schlitzen aufweisen, so dass der Regenerationsbereich durch die Vielzahl von Schlitzen gleichmäßig mit Mikrowellen bestrahlt wird.

## Revendications

1. Système d'élimination de COV utilisant des plaques de distribution de gaz, comprenant :
un réacteur d'adsorption cylindrique fixe (110) comprenant une zone d'adsorption configurée pour adsorber les COV et une zone de régénération configurée pour désorber les COV adsorbés dans la zone d'adsorption ;
une pluralité de modules micro-ondes (120) disposés à un intervalle prédéterminé le long d'une périphérie extérieure du réacteur d'adsorption cylindrique (110), la pluralité de modules micro-ondes (120) étant inclus en tant que une partie d'un boîtier (140) qui entoure une surface périphérique du réacteur d'adsorption cylindrique (110) ;
une plaque de distribution de gaz supérieure rotative (130a) comportant un tuyau d'alimentation (133a) configuré pour fournir un air recyclé à la zone de régénération et disposé sur une partie supérieure du réacteur d'adsorption cylindrique (110) ; et
une plaque de distribution de gaz inférieure rotative (130b) comportant un tuyau d'évacuation (133b) configuré pour évacuer l'air recyclé contenant des COV désorbés de la zone de régénération et disposé sur une partie inférieure du réacteur d'adsorption cylindrique (110),
dans lequel, lorsque la plaque de distribution de gaz supérieure (130a) et la plaque de distribution de gaz inférieure (130b) tournent, et puis que le tuyau d'alimentation et le tuyau d'évacuation sont situés dans une section supérieure et une section inférieure de la zone de régénération, l'air recyclé est fourni à la zone de régénération, et en même temps, un module micro-ondes (120) disposé sur une surface périphérique de la zone de régénération est commuté vers un état de fonctionnement pour chauffer la zone de régénération ;
un boîtier supplémentaire (150) qui entoure la plaque de distribution de gaz supérieure (130a) et la plaque de distribution de gaz inférieure (130b), et le module micro-ondes ; et
des entrées d'air comprimé (160) formées dans le boîtier supplémentaire (150),
dans lequel un degré d'adhérence entre les plaques de distribution de gaz supérieure et inférieure et le réacteur d'adsorption cylindrique (110) est ajusté en injectant ou en déchargeant un air comprimé à travers les entrées d'air comprimé (160), et
dans lequel la plaque de distribution de gaz supérieure (130a) et la plaque de distribution de gaz inférieure (130b) sont en contact étroit avec le réacteur d'adsorption cylindrique (110) pendant l'alimentation de l'air recyclé vers la zone de régénération et le maintien de l'état de fonctionnement du module à micro-ondes (120) ; et
la plaque de distribution de gaz supérieure (130a) et la plaque de distribution de gaz inférieure (130b) sont espacées du réacteur d'adsorption cylindrique (110) lors de l'arrêt d'une alimentation de l'air recyclé vers la zone de régénération et de la commutation du module micro-ondes (120) vers un état d'arrêt de fonctionnement.

2. Système d'élimination de COV utilisant des plaques de distribution de gaz selon la revendication 1, dans lequel le réacteur d'adsorption cylindrique (110) a une surface de la section transversale coïncidant avec les surfaces de la section transversale de la plaque de distribution de gaz supérieure (130a) et de la plaque de distribution de gaz inférieure (130b).

3. Système d'élimination de COV utilisant des plaques de distribution de gaz selon la revendication 1, dans lequel la plaque de distribution de gaz supérieure (130a) et la plaque de distribution de gaz inférieure (130b) tournent périodiquement dans la même direction et ont la même période de rotation l'une que l'autre.

4. Système d'élimination de COV utilisant des plaques de distribution de gaz selon la revendication 1, dans lequel une pluralité de tuyaux d'alimentation (133a) et de tuyaux d'évacuation (133b) sont disposés radialement à un intervalle prédéterminé autour des axes de rotation des plaques de distribution de gaz supérieure et inférieure, pour ainsi obtenir une pluralité de zones de régénération dans le réacteur d'adsorption cylindrique (110).

5. Système d'élimination de COV utilisant des plaques de distribution de gaz selon la revendication 1, comprenant en outre un réacteur catalytique configuré pour oxyder les COV désorbés dans la zone de régénération.

6. Système d'élimination de COV utilisant des plaques de distribution de gaz selon la revendication 5, comprenant en outre un échangeur de chaleur configuré pour effectuer un échange de chaleur sur un air chaud traversant le réacteur catalytique, de telle sorte qu'une chaleur perdue générée par le réacteur catalytique soit fournie à l'air recyclé.

7. Système d'élimination de COV utilisant des plaques de distribution de gaz selon la revendication 1, dans lequel chacun de la pluralité de modules micro-ondes (120) comporte des guides d'ondes qui sont disposés le long de la périphérie extérieure du réacteur d'adsorption cylindrique (110) et comportent une pluralité de fentes, de telle sorte que la zone de régénération soit uniformément irradiée par des micro-ondes à travers la pluralité de fentes.
